# FASCICULE DE BREVET EUROPEEN

(11) **EP 2 668 049 B1**
(45) Date de publication et mention de la délivrance du brevet: **18.04.2018**
(21) Numéro de dépôt: 12701348.0
(22) Date de dépôt: 25.01.2012
(51) Int. Cl.: B60H 1/00, H02K 7/08

(54) **ACTIONNEUR POUR UN VOLET D'OUVERTURE ET DE FERMETURE D'UN PASSAGE D'AIR**
AKTUATOR FÜR EINE KLAPPE ZUM ÖFFNEN UND SCHLIESSEN EINES LUFTKANALS
ACTUATOR FOR A FLAP FOR OPENING AND CLOSING AN AIR PASSAGE

(30) Priorité: 25.01.2011 FR 1100209
(43) Date de publication de la demande: 04.12.2013
(73) Titulaire: Valeo Systemes Thermiques, 78321 Le Mesnil Saint Denis (FR)
(72) Inventeur: DION, Nathalie, F-78530 Buc (FR); BARBEAU, Romain, F-78120 Rambouillet (FR)
(74) Mandataire: Metz, Gaëlle
(86) Numéro de dépôt international: PCT/EP2012/051154
(87) Numéro de publication internationale: WO 2012/101179

(56) Documents cités:
- EP-A1- 0 998 013
- FR-A1- 2 661 958
- FR-A1- 2 708 159
- US-A1- 2008 238 229
- US-A1- 2009 322 171
- US-A1- 2010 206 111

## Description

La présente invention concerne un actionneur pour un volet comportant des moyens de suppression des bruits de fonctionnement. FR 2 661 958 A1 divulgue un actionneur pouvant être employé dans les véhicules automobiles. La présente invention concerne plus particulièrement un actionneur pour un volet d'ouverture et de fermeture d'un passage d'air compris dans un dispositif de climatisation, de ventilation et/ou de chauffage, comportant un boîtier conformé pour recevoir un moteur ainsi qu'un dispositif d'engrenages.

Il est connu d'utiliser des actionneurs comportant un moteur et un dispositif d'entraînement, pour déplacer des organes mobiles entre leurs positions extrêmes de déplacement. De tels organes peuvent à titre d'exemple être des volets d'ouverture et de fermeture d'un conduit de passage d'air formé à l'intérieur d'un boîtier d'un dispositif de ventilation, de chauffage et/ou de climatisation qui est destiné à modifier les propriétés thermiques de l'air d'un habitacle d'un véhicule, notamment du type d'une automobile. Compte tenu des tolérances de fabrication de chacune des pièces composant l'actionneur, la vis motrice du moteur est apte à débattre axialement, plus particulièrement lorsque l'organe mobile arrive dans l'une de ses positions extrêmes de déplacement.

Il est connu qu'un tel moteur est disposé dans un boîtier comportant des moyens d'amortissement des bruits qui sont formés directement sur le boîtier par un surmoulage de matière plastique plus souple que celle utilisée par la fabrication du boîtier. C'est ainsi que l'utilisation de plastiques ayant des duretés différentes permet une réduction des bruits issus du déplacement de la vis motrice appartenant au moteur contre une butée formée sur le boîtier de l'actionneur. Il est aussi connu de créer à l'intérieur du boîtier, une plaquette de crapaudine, formant ladite butée destinée à recevoir une extrémité libre de la vis motrice.

Par conséquent, un tel boîtier de moteur comprend au moins une plaquette de crapaudine qui est en appui surfacique directement sur l'extrémité de la vis motrice également réalisée en matière plastique. Une telle solution vise à isoler la plaquette de crapaudine du boîtier sans pour autant éliminer le bruit généré par la mise en appui de l'extrémité de la vis motrice sur la plaquette de crapaudine.

Il a été constaté qu'une solution connue atténue les bruits sans pour autant en supprimer la présence, ce qui cause un désagrément pour l'utilisation qui perçoit de façon audible le bruit issu du choc entre l'extrémité de la vis sans fin et la tête de crapaudine.

Un but de la présente invention est de pallier tout ou partie des inconvénients de l'art antérieur relevés ci-dessus.

A cette fin, l'actionneur selon l'invention, par ailleurs conforme à la définition générique qu'en donne le préambule ci-dessus, est essentiellement innovant en ce que le boîtier comprend au moins un élément de butée destiné à limiter le déplacement d'un arbre de rotation par rapport au carter du moteur ainsi qu'un moyen de compensation d'un espace entre l'élément de butée et une extrémité libre de l'arbre de rotation.

Par ailleurs, l'actionneur objet de l'invention peut comporter l'une ou plusieurs des caractéristiques suivantes :
- ledit moyen de compensation d'un espace entre l'élément de butée et une extrémité libre de l'arbre de rotation comprend un élément déformable disposé sur l'une des faces de l'élément de butée s'étendant au droit d'une extrémité libre de l'arbre de rotation du servomoteur ; un tel moyen de compensation permettant avantageusement de maintenir un appui permanent entre l'extrémité de l'arbre de rotation du moteur contre l'élément formant butée à son déplacement axial ;
- il comprend un moyen de suppression du bruit généré par le déplacement axial de l'arbre de rotation par rapport au carter du moteur, un tel moyen de suppression du bruit comportant au moins un élément d'amortissement disposé entre l'élément de butée et le boîtier ; un tel moyen de suppression du bruit étant conçu pour s'opposer au déplacement axial de l'arbre de rotation par rapport au carter du moteur ;
- l'élément de butée destiné à limiter le déplacement axial de l'arbre de rotation est une paroi mobile par rapport à une paroi périphérique du boîtier, de sorte que le corps du boîtier est exempt de toute partie solidaire et déformable ;
- l'élément d'amortissement est mécaniquement assimilable à un ressort et est réalisé à partir d'une matière plastique déformable, par une opération de surmoulage du boîtier, ce qui représente une façon simple de concevoir des parties déformables sur un boîtier rigide ;
- l'élément de butée est réalisé en matière plastique, par un procédé de moulage traditionnel ;
- l'élément de butée est une pièce rapportée sur le boîtier, qui est montée à coulissement le long d'au moins une nervure de guidage ménagée sur le boîtier s'étendant parallèlement à l'axe de déplacement axial de l'arbre de rotation du moteur ; un tel élément de butée permet avantageusement d'être facilement rapporté sur tout boîtier existant, sans nécessiter de modification des moules de fabrication, rendant de la sorte possible la modification des propriétés d'absorption/réduction du bruit des boîtiers existants ;
- ledit moyen de compensation d'un espace entre l'élément de butée et une extrémité libre de l'arbre de rotation est une cale réalisée en élastomère et obtenue selon une opération de surmoulage de l'élément de butée, ce qui permet avantageusement d'opérer en simultané de la fabrication du boîtier à la fabrication de l'élément de butée comportant ledit moyen de suppression du bruit comportant au moins un élément d'amortissement disposé entre l'élément de butée et le boîtier ;
- la matière plastique utilisée à la fabrication de l'élément d'amortissement a une dureté plus élevée que la matière plastique utilisée à la fabrication de la cale formant ledit moyen de compensation d'un espace entre l'élément de butée et une extrémité libre de l'arbre de rotation, de préférence la cale est un élastomère de dureté shore comprise entre 25 et 60 ;
- l'extrémité libre de l'arbre de rotation est disposée en permanence en appui sur ledit moyen de compensation d'un espace entre l'élément de butée et une extrémité libre de l'arbre de rotation, le jeu d'assemblage étant de la sorte rendu nul ;
- ledit moyen de compensation d'un espace entre l'élément de butée et une extrémité libre de l'arbre de rotation est revêtue d'une couche de réduction du coefficient d'adhérence destiné à faciliter le mouvement de rotation de l'arbre de rotation du moteur par rapport à l'élément de butée, une telle couche permettant une réduction de l'énergie nécessaire à la mise en rotation de l'arbre du moteur, favorisant de la sorte l'énergie consommée par ce dernier.

D'autres avantages et particularités de l'invention ressortent de la description de modes de réalisation faite ci-après en référence aux dessins annexés dans lesquels :
La figure 1 est une vue en coupe partielle d'un actionneur permettant le déplacement d'un volet, selon l'invention,
La figure 2 est un agrandissement d'une zone D de la figure 1 représentant de manière schématique un moyen de compensation d'un espace entre l'élément de butée et une extrémité libre de l'arbre de rotation et un moyen de suppression du bruit généré par le déplacement axial de l'arbre de rotation par rapport au carter du moteur.

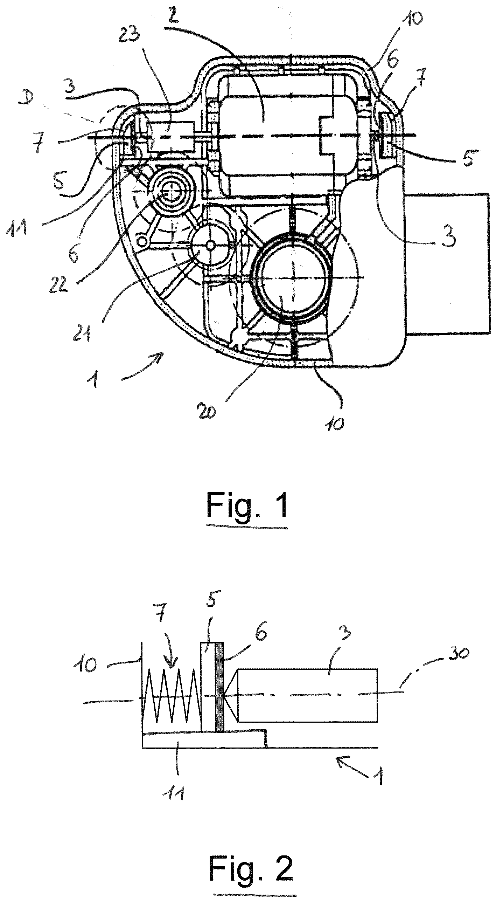

En se reportant à la figure 1, il est représenté un actionneur permettant le déplacement d'un élément mobile entre ses positions extrêmes de fonctionnement. Un tel élément mobile est par exemple du type d'un volet destiné à ouvrir ou fermer un passage d'écoulement d'un flux d'air dans un dispositif de climatisation, de ventilation et/ou de chauffage. A cet effet, l'actionneur comprend un moto-réducteur comportant un moteur 2 et un ensemble d'engrenages 21, 22 et 23 reliant l'arbre de rotation 3 du moteur à un arbre d'entraînement 20.

Ce dernier est de préférence relié audit volet (non représenté) de sorte que la rotation de l'arbre d'entraînement 20 provoque un changement de position du volet entre des positions extrêmes d'ouverture et de fermeture d'un passage d'écoulement d'un flux d'air dans un dispositif de climatisation, de ventilation et/ou de chauffage qui n'a pas été représenté.

L'arbre de rotation 3 comporte une vis 23 sans fin formant une roue menante qui engrène des roues dentées, notamment des première et seconde roues dentées 22 et 21. Ladite seconde roue dentée 21 forme une roue menante qui engrène l'arbre d'entraînement 20.

Les éléments susmentionnés sont reçus dans un boîtier 1 de l'actionneur. Le boîtier 1 comprend au moins une paroi périphérique 10 s'étendant perpendiculairement à une paroi de fond. Une telle paroi périphérique comprend un logement dédié au moteur 2.

Le logement dédié au moteur comprend des supports en matériau déformable permettant d'absorber les vibrations de ce dernier, lors de son fonctionnement.

Selon un mode de réalisation préféré et illustré sur la figure 1, le moteur 2 comprend un arbre de rotation 3 traversant l'intégralité du carter moteur. Les extrémités libres de l'arbre de rotation 3 s'étendent hors du carter du moteur.

Chacune d'entre les extrémités libres s'étend au droit et de façon sensiblement perpendiculaire d'au moins un élément de butée 5 destiné à limiter le déplacement de l'arbre de rotation 3 par rapport au carter du moteur 2.

De manière préférentielle encore, ledit élément de butée 5 comprend un moyen de compensation d'un espace entre l'élément de butée 5 et l'extrémité libre de l'arbre de rotation 3.

Un tel moyen est réalisé à partir d'un élément déformable, tel qu'un élastomère, ayant une dureté comprise entre 25 et 60 Shore.

Ledit élément déformable forme ledit moyen de compensation d'espaces entre l'élément de butée 5 et une extrémité libre de l'arbre de rotation 3. De tels espaces sont issus des tolérances de fabrication des pièces constitutives du moteur 2, de l'ensemble d'engrenages 20, 21, 22 et 23 ainsi que du boîtier 1.

Ledit élément déformable formant ledit moyen 6 de compensation d'un espace entre l'élément de butée 5 et une extrémité libre de l'arbre 3 de rotation est disposé sur l'une des faces de l'élément de butée 5.

Comme cela est représenté sur la figure 2, l'élément déformable susmentionné est positionné sur l'élément de butée, que l'on nomme aussi de tête de crapaudine. L'élément déformable est une cale réalisée en élastomère et obtenue selon une opération de surmoulage de l'élément de butée 5.

Il est ainsi disposé entre l'arbre de rotation 3 et l'élément de butée 5. Compte tenu du fait que l'arbre de rotation 3 est réalisé en acier et que l'élément de butée 5 est réalisé en matière plastique rigide, la présence de l'élément déformable réalisé en élastomère évite avantageusement une mise en appui d'une pièce en acier directement sur une pièce en plastique, et réduit fortement une usure prématurée de la pièce plastique. En outre, cet élément déformable élastomère contribue à réduire le bruit généré par la mise en appui de l'arbre de rotation 3 sur l'élément de butée 5, par exemple lors du démarrage du moteur 2.

La face de l'élément déformable sur laquelle est disposé en appui l'extrémité libre de l'arbre de rotation 3 est sensiblement de forme complémentaire à cette dernière.

L'élément déformable formant ledit moyen 6 de compensation des espaces est, selon un mode de réalisation préféré, revêtu d'une couche de réduction du coefficient d'adhérence. A titre d'exemple, une telle couche est réalisée à partir de polytétrafluoroéthylène. Une telle couche permet avantageusement de faciliter le mouvement de rotation de l'arbre 3 par rapport à l'élément de butée 5.

Le fonctionnement de l'actionneur de l'invention est facilité par les jeux de montage qui deviennent par conséquent une nécessité mais aussi une source de bruit.

C'est la raison pour laquelle l'arbre de rotation 3 est, en outre mobile en rotation, mobile axialement. Pour s'affranchir toutefois du bruit généré lors d'un choc entre l'arbre de rotation et le carter du moteur 2, l'actionneur de l'invention comprend un élément d'amortissement 7 formant un moyen de suppression du bruit disposé entre l'élément de butée 5 et la paroi périphérique 10 du boîtier 1. L'élément d'amortissement 7 est mécaniquement assimilable à un ressort de part sa loi effort/course.

Selon un mode de réalisation préféré, l'élément d'amortissement est réalisé en matière plastique déformable selon une opération de surmoulage du boîtier 1. De préférence, la matière plastique utilisée à la fabrication de l'élément d'amortissement 7 a une dureté plus élevée que la matière plastique utilisée à la fabrication de la cale formant ledit moyen 6 de compensation d'un espace entre l'élément de butée 5 et une extrémité libre de l'arbre 3.

Selon une variante de réalisation, l'élément d'amortissement 7 est une lame métallique déformable, de forme sensiblement en V selon une coupe transversale.

L'élément de butée 5 est une paroi mobile par rapport à une paroi périphérique 10 qui est destinée à limiter le déplacement axial de l'arbre de rotation 3. Avantageusement, la course d'écrasement de l'élément d'amortissement 7 est inférieure au débattement de l'arbre de rotation 3 par rapport au carter moteur.

L'élément de butée 5 est une pièce rapportée sur le boîtier 1, qui est montée à coulissement sur le fond du boîtier 1. A cet effet, le boîtier comprend des nervures 11 de guidage le long desquelles l'élément de butée 5 est apte à coulisser. De telles nervures s'étendent parallèlement à l'axe 11 de déplacement axial de l'arbre 3.

Avantageusement encore, le contre effort généré par l'élément d'amortissement 7 est supérieur à l'effort de débattement axial de l'arbre de rotation 3. L'élément d'amortissement 7 est alors déformable en compression selon une direction sensiblement parallèle à l'axe 30 de rotation de l'arbre 3. La limite de compression est atteinte avant que l'arbre 3 ne vienne en appui contre le carter du moteur, de sorte que l'élément d'amortissement 7 forme, après déformation, une butée au déplacement axial de l'arbre 3.

De manière avantageuse, l'actionneur selon l'invention est obtenu par un procédé de fabrication comportant une étape de moulage du boîtier 1 qui soit distincte d'une étape de fabrication de l'élément de butée 5 comportant ledit moyen de compensation d'un espace entre l'élément de butée 5 et une extrémité libre de l'arbre 3 de rotation.

Le procédé de fabrication de l'actionneur, comporte :
- une étape de réalisation du boîtier 1 par une opération de moulage d'une matière plastique,
- une étape de réalisation de chaque élément de butée 5 comportant une opération de moulage de ce dernier et une opération de surmoulage de la cale formant ledit moyen 6 de compensation des espaces, une telle étape étant de préférence réalisée en concomitance de l'étape de réalisation du boîtier,
- une étape de positionnement de chacun des élément de butée 5 sur le boîtier 1,
- une étape de montage du moteur 2 dans un logement dédié ménagé sur le boîtier 1, de telle sorte que chacune des extrémités libre de l'arbre 3 du moteur vienne en appui contre la cale formant ledit moyen 6 de compensation des espaces.

Ledit procédé comprend une étape de réalisation de chacun des éléments d'amortissement 7 formant ledit moyen de suppression du bruit de fonctionnement du moteur.

Pour ce faire, le procédé de fabrication du boîtier comprend préférentiellement une étape de surmoulage de chacun des éléments d'amortissement 7 formant ledit moyen de suppression du bruit de fonctionnement du moteur sur le boîtier 1.

Selon une variante de réalisation de l'actionneur de l'invention, ce dernier est obtenu par un procédé de fabrication qui comprend l'agencement d'une lame déformable entre la paroi périphérique 10 du boîtier 1 et l'élément de butée 5 préalablement disposé sur le boîtier 1.

Le procédé de fabrication permet ainsi de manière simple d'améliorer la qualité de l'actionneur en terme(s) de bruit de fonctionnement par l'ajout, au juste nécessaire, de moyens d'élimination des bruits à la source génératrice de bruit.

Comparativement à toute solution connue dépourvue de cale formant un moyen 6 de compensation des espaces entre l'arbre 3 et chacun des éléments 5 de butée, le bruit de fonctionnement de l'actionneur est environ 30% plus faible.

## Revendications

1. Actionneur pour un volet d'ouverture et de fermeture d'un passage d'air compris dans un dispositif de climatisation, de ventilation et/ou de chauffage, comportant un boîtier (1) conformé pour recevoir un moteur (2) ainsi qu'un dispositif (4) d'engrenages, dans lequel le boîtier (1) comprend au moins un élément de butée (5) destiné à limiter le déplacement d'un arbre (3) de rotation par rapport au carter du moteur (2) ainsi qu'un moyen (6) de compensation d'un espace entre l'élément de butée (5) et une extrémité libre de l'arbre (3) de rotation et dans lequel il comprend un moyen de suppression du bruit généré par le déplacement axial de l'arbre de rotation (3) par rapport au carter du moteur, un tel moyen de suppression du bruit comportant au moins un élément d'amortissement (7) disposé entre l'élément de butée (5) et le boîtier (1), **caractérisé en ce que** ledit moyen (6) de compensation d'un espace entre l'élément de butée (5) et une extrémité libre de l'arbre (3) de rotation comprend un élément déformable disposé sur l'une des faces de l'élément de butée (5) s'étendant au droit d'une extrémité libre de l'arbre (3) de rotation du servomoteur (2).

2. Actionneur selon l'une quelconque des revendications 1, **caractérisé en ce que** l'élément de butée (5) destiné à limiter le déplacement axial de l'arbre (3) de rotation est une paroi mobile par rapport à une paroi périphérique (10) du boîtier (1).

3. Actionneur selon la revendication 1, **caractérisé en ce que** l'élément d'amortissement (7) est mécaniquement assimilable à un ressort et est réalisé à partir d'une matière plastique déformable, par une opération de surmoulage du boîtier.

4. Actionneur selon l'une quelconque des revendications 1 à 3, **caractérisé en ce que** l'élément de butée (5) est réalisé en matière plastique.

5. Actionneur selon l'une quelconque des revendications 1 à 3, **caractérisé en ce que** l'élément de butée (5) est une pièce rapportée sur le boîtier (1), qui est montée à coulissement le long d'au moins une nervure (11) de guidage ménagée sur le boîtier (1) s'étendant parallèlement à l'axe de déplacement axial de l'arbre de rotation (3) du moteur (2).

6. Actionneur selon l'une quelconque des revendications 1 à 5, **caractérisé en ce que** ledit moyen (6) de compensation d'un espace entre l'élément de butée (5) et une extrémité libre de l'arbre (3) de rotation est une cale réalisée en élastomère et obtenue selon une opération de surmoulage de l'élément de butée (5).

7. Actionneur selon la revendication 3 avec la revendication 6, **caractérisé en ce que** la matière plastique utilisée à la fabrication de l'élément d'amortissement (7) a une dureté plus élevée que la matière plastique utilisée à la fabrication de la cale formant ledit moyen (6) de compensation d'un espace entre l'élément de butée (5) et une extrémité libre de l'arbre (3) de rotation.

8. Actionneur selon l'une quelconque des revendications 1 à 7, **caractérisé en ce que** l'extrémité libre de l'arbre de rotation (3) est disposée en permanence en appui sur ledit moyen (6) de compensation d'un espace entre l'élément de butée (5) et une extrémité libre de l'arbre (3) de rotation.

9. Actionneur selon l'une quelconque des revendications 1 à 8, **caractérisé en ce que** ledit moyen (6) de compensation d'un espace entre l'élément de butée (5) et une extrémité libre de l'arbre (3) de rotation est revêtue d'une couche de réduction du coefficient d'adhérence destiné à faciliter le mouvement de rotation de l'arbre (3) de rotation du moteur (2) par rapport à l'élément de butée (5).

## Patentansprüche

1. Aktuator für eine Klappe zum Öffnen und Schließen eines Luftkanals, der in einer Klimatisierungs-, Lüftungs- und/oder Heizeinrichtung enthalten ist, ein Gehäuse (1) aufweisend, das dafür ausgebildet ist, einen Motor (2) sowie eine Getriebevorrichtung (4) aufzunehmen, wobei das Gehäuse (1) wenigstens ein Anschlagelement (5), das dazu bestimmt ist, die Verschiebung einer rotierenden Welle (3) in Bezug auf das Gehäuse des Motors (2) zu begrenzen, sowie ein Mittel (6) zum Ausgleich eines Zwischenraums zwischen dem Anschlagelement (5) und einem freien Ende der rotierenden Welle (3) umfasst, und wobei es ein Mittel zur Unterdrückung des Geräusches umfasst, das durch die axiale Verschiebung der rotierenden Welle (3) in Bezug auf das Gehäuse des Motors erzeugt wird, wobei dieses Mittel zur Unterdrückung des Geräusches wenigstens ein Dämpfungselement (7) aufweist, das zwischen dem Anschlagelement (5) und dem Gehäuse (1) angeordnet ist,
**dadurch gekennzeichnet, dass** das Mittel (6) zum Ausgleich eines Zwischenraums zwischen dem Anschlagelement (5) und einem freien Ende der rotierenden Welle (3) ein auf einer der Seiten des Anschlagelements (5) angeordnetes verformbares Element umfasst, das sich direkt bei einem freien Ende der rotierenden Welle (3) des Stellmotors (2) erstreckt.

2. Aktuator nach einem der Ansprüche 1, **dadurch gekennzeichnet, dass** das Anschlagelement (5), das dazu bestimmt ist, die axiale Verschiebung der rotierenden Welle (3) zu begrenzen, eine in Bezug auf eine Umfangswand (10) des Gehäuses (1) bewegliche Wand ist.

3. Aktuator nach Anspruch 1, **dadurch gekennzeichnet, dass** das Dämpfungselement (7) mechanisch mit einer Feder vergleichbar ist und durch einen Arbeitsgang der Überformung des Gehäuses aus Kunststoff hergestellt wird.

4. Aktuator nach einem der Ansprüche 1 bis 3, **dadurch gekennzeichnet, dass** das Anschlagelement (5) aus Kunststoff hergestellt ist.

5. Aktuator nach einem der Ansprüche 1 bis 3, **dadurch gekennzeichnet, dass** das Anschlagelement (5) ein an das Gehäuse (1) angesetztes Teil ist, welches entlang wenigstens einer an dem Gehäuse (1) ausgebildeten Führungsrippe (11), die sich parallel zur Achse der axialen Verschiebung der rotierenden Welle (3) des Motors (2) erstreckt, gleitend gelagert ist.

6. Aktuator nach einem der Ansprüche 1 bis 5, **dadurch gekennzeichnet, dass** das Mittel (6) zum Ausgleich eines Zwischenraums zwischen dem Anschlagelement (5) und einem freien Ende der rotierenden Welle (3) eine Beilage ist, die aus Elastomer hergestellt ist und durch einen Arbeitsgang der Überformung des Anschlagelements (5) erhalten wird.

7. Aktuator nach Anspruch 3 in Verbindung mit Anspruch 6, **dadurch gekennzeichnet, dass** der zur Herstellung des Dämpfungselements (7) verwendete Kunststoff eine größere Härte aufweist als der Kunststoff, der zur Herstellung der Beilage verwendet wird, die das Mittel (6) zum Ausgleich eines Zwischenraums zwischen dem Anschlagelement (5) und einem freien Ende der rotierenden Welle (3) bildet.

8. Aktuator nach einem der Ansprüche 1 bis 7, **dadurch gekennzeichnet, dass** das freie Ende der rotierenden Welle (3) ständig anliegend an dem Mittel (6) zum Ausgleich eines Zwischenraums zwischen dem Anschlagelement (5) und einem freien Ende der rotierenden Welle (3) angeordnet ist.

9. Aktuator nach einem der Ansprüche 1 bis 8, **dadurch gekennzeichnet, dass** das Mittel (6) zum Ausgleich eines Zwischenraums zwischen dem Anschlagelement (5) und einem freien Ende der rotierenden Welle (3) mit einer Schicht zur Verringerung des Haftungskoeffizienten überzogen ist, die dazu bestimmt ist, die Drehbewegung der rotierenden Welle (3) des Motors (2) in Bezug auf das Anschlagelement (5) zu erleichtern.

## Claims

1. Actuator for a flap for opening and closing an air passage included in an air-conditioning, ventilating and/or heating device, comprising a housing (1) shaped to receive a motor (2) as well as a gearing device (4), in which the housing (1) includes at least one stop element (5) for limiting the movement of a rotating shaft (3) with respect to the casing of the motor (2), as well as a means (6) of compensating for a space between the stop element (5) and a free end of the rotating shaft (3), and in which it includes a means of suppressing the noise generated by the axial movement of the rotating shaft (3) with respect to the casing of the motor, such a noise-suppressing means comprising at least one damping element (7) placed between the stop element (5) and the housing (1), **characterized in that** said means (6) of compensating for a space between the stop element (5) and a free end of the rotating shaft (3) includes a deformable element placed on one of the faces of the stop element (5) extending opposite a free end of the rotating shaft (3) of the servomotor (2).

2. Actuator according to any one of Claims 1, **characterized in that** the stop element (5) for limiting the axial movement of the rotating shaft (3) is a wall which is moveable in relation to a peripheral wall (10) of the housing (1).

3. Actuator according to Claim 1, **characterized in that** the damping element (7) is mechanically similar to a spring and is produced from a deformable plastic, using an operation of overmolding the housing.

4. Actuator according to any one of Claims 1 to 3, **characterized in that** the stop element (5) is made of plastic.

5. Actuator according to any one of Claims 1 to 3, **characterized in that** the stop element (5) is a piece attached to the housing (1), which piece is mounted in a sliding manner along at least one guide rib (11) arranged on the housing (1) extending parallel to the axis for axial movement of the rotating shaft (3) of the motor (2).

6. Actuator according to any one of Claims 1 to 5, **characterized in that** said means (6) of compensating for a space between the stop element (5) and a free end of the rotating shaft (3) is a block made from elastomer and obtained using an operation of overmolding the stop element (5).

7. Actuator according to Claim 3 together with Claim 6, **characterized in that** the plastic used for manufacturing the damping element (7) has a hardness that is greater than the plastic used for manufacturing the block acting as said means (6) of compensating for a space between the stop element (5) and a free end of the rotating shaft (3).

8. Actuator according to any one of Claims 1 to 7, **characterized in that** the free end of the rotating shaft (3) is permanently placed in a pressing manner on said means (6) of compensating for a space between the stop element (5) and a free end of the rotating shaft (3) .

9. Actuator according to any one of Claims 1 to 8, **characterized in that** said means (6) of compensating for a space between the stop element (5) and a free end of the rotating shaft (3) is covered with a layer for reducing the coefficient of adhesion for facilitating the rotating movement of the rotating shaft (3) of the motor (2) in relation to the stop element (5).
